# FASCICULE DE BREVET EUROPEEN

(11) **EP 0 502 776 B1**
(45) Date de publication et mention de la délivrance du brevet: **16.08.1995**
(21) Numéro de dépôt: 92400538.2
(22) Date de dépôt: 03.03.1992
(51) Int. Cl.: F16H 57/04

(54) **Procédé de refroidissement de réducteurs lubrifiés à l'huile pulvérisée et appareillage de mise en oeuvre**
Verfahren zur Kühlung eines mit pulverisiertem Öl gemischten Untersetzungsgetriebes und Einrichtung zu dessen Anwendung
Cooling method for reduction gear lubricated by pulverized oil and device for its application

(30) Priorité: 07.03.1991 FR 9102729
(43) Date de publication de la demande: 09.09.1992
(73) Titulaire: AEROSPATIALE Société Nationale Industrielle, 75781 Paris Cédex 16 (FR)
(72) Inventeur: Francois, Roland Clément, F-13480 Cabries (FR)
(74) Mandataire: Lhuillier, René

(56) Documents cités:
- CH-A- 158 611
- DE-A- 2 220 566
- ORGANI DI TRASMISSIONE. vol. 17, no. 3, Mars 1986, MILANO IT pages 73 - 84;SARAVALLE: 'LA lubrificatione degli ingranaggi industriali e per autoveicoli'

## Description

L'invention se rapporte aux réducteurs mécaniques de forte puissance à taux de réduction élevé et concerne plus particulièrement un procédé pour assurer leur refroidissement et l'appareillage intégré auxdits réducteurs pour mettre en oeuvre ledit procédé.

Les réducteurs mécaniques qui transmettent des puissances élevées sont lubrifiés par de l'huile sous pression grâce à une ou à des pompes de lubrification qui sont entraînées par des jeux d'engrenages prenant leur mouvement sur une chaîne principale du réducteur ou par une source d'entraînement annexe. Ces organes de réduction doivent être intensément refroidis, car les frottements internes y produisent un échauffement important de l'huile de lubrification qui, s'il devient excessif, diminue le pouvoir lubrifiant de l'huile surchauffée ou décomposée, compromettant ainsi la fiabilité des organes et entraînant la chute des caractéristiques mécaniques des matériaux soumis à des températures élevées.

Pour assurer ce refroidissement, on utilise généralement un échangeur huile/air dans lequel circule l'huile sous pression. Sur les véhicules terrestres ou aéronautiques, l'échange de chaleur se fait avec de l'air soufflé à travers un radiateur, soit par une prise d'air dynamique si le véhicule a une vitesse suffisante en permanence, soit par un ventilateur quand la puissance à évacuer est élevée et que le véhicule n'a pas de vitesse propre pendant certaines phases de son utilisation, ce qui est le cas d'un hélicoptère en vol stationnaire.

Quand il s'agit d'hélicoptères soumis à des puissances peu élevées, par exemple de moins de 600 Kw, on peut assurer le refroidissement des organes de réduction sans utiliser d'échangeur, à condition d'augmenter artificiellement les surfaces d'échange du carter du réducteur et de les soumettre à un soufflage, de sorte que la température de l'huile ne dépasse pas un seuil trop pénalisant pour la fiabilité des organes ou qui en tout cas n'atteint pas une limite au-delà de laquelle ils se détérioreraient (150°C environ). L'absence d'échangeur est évidemment un avantage, car il permet une économie de masse, et évite l'emploi des tuyauteries et raccords correspondants, dont la vulnérabilité est grande et qui peuvent occasionner la perte totale d'huile en cas de fuite ou de rupture, imposant à l'hélicoptère de se poser dans les plus brefs délais.

Par contre dans le cas des boîtes de transmission principales d'hélicoptères de puissances plus élevées, par exemple de 1000 Kw et plus, il faut utiliser un ou plusieurs échangeurs ventilés par un ou des ventilateurs. Ces échangeurs et leurs circuits de refroidissement représentent cependant une masse supplémentaire qui, à titre d'exemple, peut atteindre 30 Kg pour une boîte de transmission principale bimoteur de 2000 Kw dont les vitesses d'entrée sont celles des turbomoteurs (supérieures à 20.000 tours/mn). Hormis le fait que ce supplément de poids est difficilement acceptable et que les échangeurs en question génèrent des risques de fuite d'huile, ils introduisent un intermédiaire métallique qui complique et ralentit les échanges au détriment de leur efficacité.

L'invention permet de s'affranchir de ces inconvénients puisqu'elle supprime le circuit externe de refroidissement d'huile par échangeur en proposant d'intégrer la fonction refroidissement à la boîte de transmission principale elle-même.

Un objet de la présente invention est un procédé de refroidissement d'un réducteur lubrifié par de l'huile sous pression, pulvérisée par des gicleurs, caractérisé en ce qu'il consiste à admettre dans ledit réducteur un débit d'air frais préalablement filtré, à le diriger à l'intérieur dudit réducteur pour qu'il se mélange au brouillard d'huile ambiant en s'échauffant par échange direct avec l'huile et par contact direct avec les composants du réducteur qui sont générateurs de chaleur, à aspirer le mélange d'air et d'huile hors du réducteur, à épurer l'air de l'huile qu'il contient et à le rejeter à l'extérieur du réducteur.

Un autre objet de la présente invention consiste en un dispositif permettant de mettre en oeuvre le procédé de refroidissement d'un réducteur lubrifié par de l'huile sous pression pulvérisée par des gicleurs, caractérisé en ce que le réducteur est pourvu d'une part d'au moins une entrée d'air équipée de filtres et d'autre part d'un ventilateur d'extraction destiné à aspirer dans le réducteur l'air mélangé au brouillard d'huile et en ce que des moyens de recueil et de drainage de l'huile sont prévus en amont et/ou au niveau dudit ventilateur d'extraction.

Avantageusement l'entrée d'air est coiffée d'une volute d'admission à embouchure orientée vers le bas et fermée par une grille à grosses mailles.

Selon une caractéristique particulière de l'invention, la roue du ventilateur d'extraction est entraînée par un des organes tournants du réducteur par l'intermédiaire d'un arbre, et elle tourne à l'intérieur d'un carter de récupération communiquant avec l'extérieur par un conduit d'évacuation.

Selon l'invention un moyen de recueil d'huile consiste en un déflecteur monté sur l'arbre, à l'intérieur de l'enceinte de la boîte de transmission, et en amont de la roue, et un autre moyen de recueil et de drainage d'huile consiste en un orifice prévu au fond du carter, qui communique avec un bac de récupération d'huile par un petit conduit collecteur.

D'autres caractéristiques particulières et avantages de l'invention apparaîtront à la lecture de la description suivante illustrant un mode particulier de réalisation pris à titre d'exemple, et dans laquelle on fait référence aux dessins annexés qui représentent:
Figure 1 une vue en élévation d'une boîte de transmission principale d'hélicoptère selon l'invention;
Figure 2 une vue partielle en coupe de la boîte montrant l'entrée d'air;
Figure 3 une vue partielle en coupe de la boîte montrant le ventilateur d'extraction;
Figure 4 une vue en coupe dudit ventilateur d'extraction.

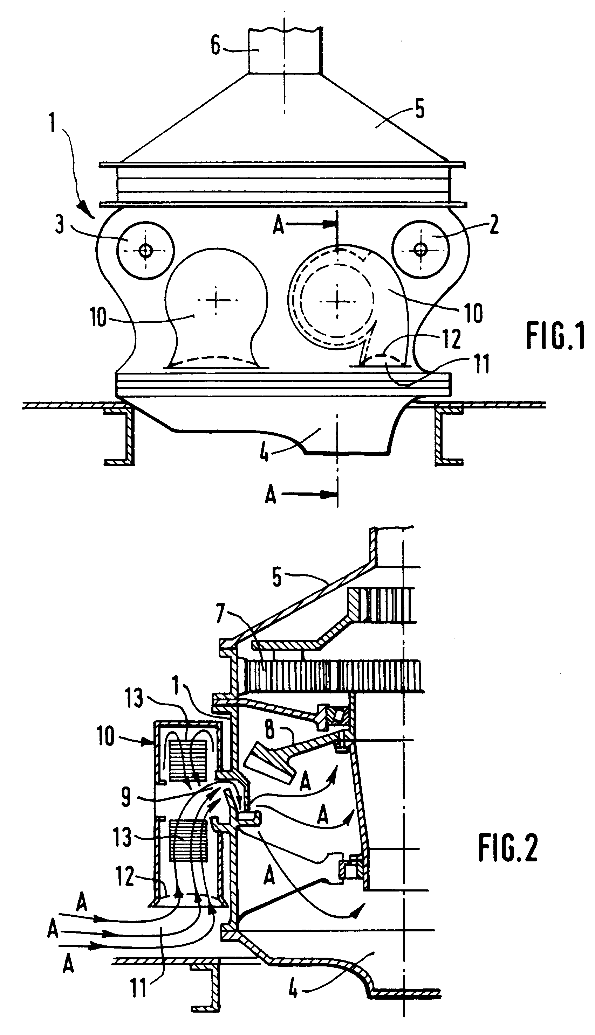

Les figures 1 et 2 illustrent une boîte 1 de transmission principale d'hélicoptère bimoteur à deux axes moteurs (2, 3), dont la partie inférieure forme un bac 4 de récupération d'huile, et dont le couvercle supérieur 5 est traversé par l'arbre d'entraînement du rotor principal 6 entraîné par un réducteur épicycloïdal 7 à axe vertical. Au voisinage des roues menées 8 de l'étage intermédiaire de réduction sont prévues deux entrées d'air 9 dans la boîte de transmission. Ces entrées d'air sont chacune coiffées extérieurement d'une volute d'admission 10 dont l'embouchure 11 est orientée vers le bas de façon à éviter l'ingestion d'eau et permettre son ruissellement. A proximité de l'embouchure, l'entrée d'air comporte une grille 12 à grosses mailles destinée à empêcher le passage de grosses particules ou objets comme des chiffons, des feuilles etc... A l'intérieur de la volute sont également prévus des filtres à air 13. D'autres entrées d'air pourraient être envisagées si l'on veut améliorer l'efficacité du refroidissement. On pourrait aussi se contenter d'une seule entrée d'air, mais le ventilateur d'extraction devrait alors être capable d'assurer une plus grande dépression à l'aspiration. Les flèches A, à la figure 2, montrent le cheminement de l'air dans le volute 10 vers l'entrée d'air 9, puis à l'intérieur de la boîte de transmission.

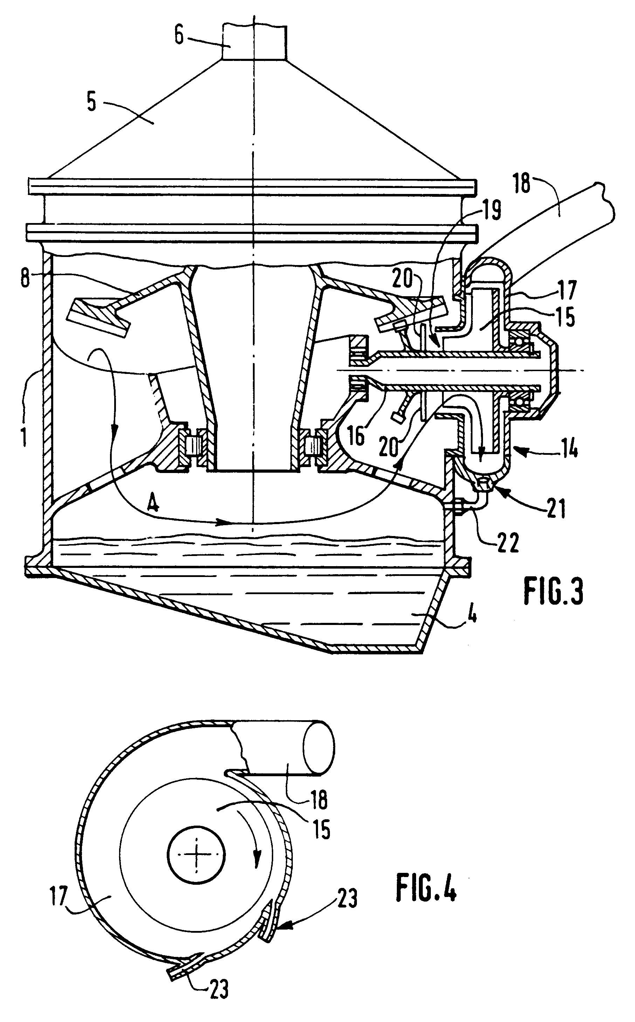

La figure 3 montre le système d'extraction de l'air et de séparation de l'huile. Sur un côté de la boîte de transmission 1 est prévu un ventilateur axial centrifuge 14 dont la roue 15 est entraînée par la chaîne cinématique de boîte de transmission par l'intermédiaire d'un arbre 16. La roue tourne à l'intérieur d'un carter de récupération 17 communiquant avec l'extérieur par un conduit d'évacuation 18. L'arbre 16 traverse une ouverture d'admission 19 faisant communiquer la boîte de transmission et le carter. A l'entrée du ventilateur, et à proximité de cette ouverture, un déflecteur centrifuge 20 est monté sur l'arbre 16 à l'intérieur de l'enceinte 1 de la boîte de transmission et en amont de la roue 15. Un orifice 21 de drainage d'huile est prévu au fond du carter 17 et communique avec le bac 4 par unpetit conduit collecteur 22. Ce dispositif peut être constitué de plusieurs goulottes de récupération 23 réparties à la partie inférieure du carter et alimentant le conduit 22, comme on le voit plus précisément à la figure 4.

Quand la boîte de transmission est en fonctionnement la roue 15 du ventilateur d'extraction 14 aspire de l'air par les entrée d'air 9. Cet air préalablement filtré par les filtres (12, 13) se mélange au brouillard d'huile ambiant à l'intérieur de la boîte de transmission. Les deux fluides se mélangent intimement au centre de la boîte, ledit mélange étant favorisé par l'éclatement des jets d'huile distribués par les gicleurs qui assurent, de façon connue, la lubrification des pignons et des paliers, mailles aussi par le ruissellement de l'huile du haut en bas dans la boîte. La circulation à contre-sens de l'air (flèches A) participe donc au refroidissement du mélange. De plus, l'air refroidit directement les composants générateurs de chaleur, en particulier les dentures des engrenages ce qui augmente l'efficacité de transfert de chaleur à l'air. On a préférentiellement placé le ventilateur d'extraction à un endroit tel que la trajectoire de l'air lèche autant que possible le plus d'éléments à refroidir. La présence du déflecteur 20 en amont du ventilateur 14 empêche les projections directes d'huile dans le carter et permet de récupérer la plus grande partie de l'huile directement dans le bac 4. L'huile qui reste et atteint la roue 15 est projetée par centrifugation sur les parois du carter 17 et récupérée par la ou les goulottes 13 dans le conduit collecteur 22, vers le bac 4. La pression d'air fournie par le ventilateur favorise ce drainage. Le mélange huile/air ne passe donc pas par un intermédaire métallique comme c'est le cas dans les échangeurs classiques du type à radiateur, qui freinent l'échange. Le dispositif d'échange selon l'invention est donc plus direct et plus rapide. Il résulte de cette efficacité de l'échange que le débit d'air nécessaire pour évacuer une puissance calorifique donnée est beaucoup plus faible. Cet avantage se traduit par une masse plus faible de la fonction refroidissement ; ce gain de masse est augmenté des économies de tuyauteries, de raccords et de radiateurs. En outre, puisque la boîte de transmission n'est plus connectée à des conduits d'huile ou d'air, son montage-démontage en est d'autant plus aisé.

Le dispositif présente aussi d'autres avantages sur le plan de la sécurité. En effet le risque de perte d'huile qui existait au niveau d'un circuit classique de refroidissement externe, disparait. D'autre part, les risques de fuite aux joints dynamiques sont réduits puisque la boîte de transmission est en dépression. Enfin en cas de perte totale d'huile, la fonction refroidissement reste néanmoins assurée et la durée possible de fonctionnement sans huile s'en trouve augmentée.

## Revendications

1. Procédé de refroidissement d'un réducteur mécanique lubrifié par de l'huile sous pression pulvérisée, caractérisé en ce qu'il consiste à admettre dans le réducteur un débit d'air frais à température ambiante et préalablement filtré, à le diriger à l'intérieur dudit réducteur pour qu'il soit mélangé au brouillard d'huile en s'échauffant par échange direct avec l'huile et par contact direct avec les composants du réducteur qui sont générateurs de chaleur, à aspirer le mélange d'air et d'huile hors du réducteur, à épurer l'air de l'huile qu'il contient et à rejeter l'air épuré à l'extérieur du réducteur.

2. Dispositif intégré de refroidissement d'un réducteur mécanique selon le procédé de la revendication 1, caractérisé en ce que le réducteur est pourvu d'une part d'au moins une entrée d'air (9, 10) équipée de filtres (12, 13) et, d'autre part, d'un ventilateur d'extraction (14) destiné à aspirer dans le réducteur l'air mélangé au brouillard d'huile de lubrification et en ce que des moyens (20, 21) de recueil et de drainage de l'huile sont prévus en amont et/ou au niveau dudit ventilateur d'extraction.

3. Dispositif de refroidissement selon la revendication 2, caractérisé en ce que l'entrée d'air (9) est coiffée d'une volute d'admission (10) à embouchure (11) orientée vers le bas et dont l'embouchure est munie d'une grille (12) à grosses mailles.

4. Dispositif de refroidissement selon la revendication 2, caractérisé en ce que la roue (15) du ventilateur d'extraction (14 ) est entraînée par la chaîne cinématique du réducteur par l'intermédiaire d'un arbre (16).

5. Dispositif de refroidissement selon les revendications 2 et 4, caractérisé en ce que la roue (15) du ventilateur d'extraction (14) tourne à l'intérieur d'un carter de récupération (17) communiquant avec l'extérieur par un conduit d'évacuation (18).

6. Dispositif de refroidissement selon les revendications 2 et 4, caractérisé en ce qu'un moyen de recueil d'huile consiste en un déflecteur centrifuge (20) monté sur l'arbre (16), à l'intérieur de l'enceinte (1) du réducteur, et en amont de la roue (15).

7. Dispositif de refroidissement selon les revendications 2, 4 et 5, caractérisé en ce qu'un moyen de recueil et de drainage d'huile consiste en un orifice (21) prévu au fond du carter (17), qui communique avec un bac (4) de récupération d'huile par un petit conduit collecteur (22).

8. Dispositif de refroidissement selon la revendication 7, caractérisé en ce que plusieurs goulottes de récupération (23) réparties à la partie inférieure du carter (17) alimentent le conduit collecteur (22).

## Claims

1. Method for cooling a mechanical reduction gear lubricated by sprayed oil under pressure, characterized in that it consists in admitting into the reduction gear a flow of previously filtered fresh air at ambient temperature, and in directing it inside the said reduction gear so as to be mixed with the oil mist while being heated by direct exchange with the oil and by direct contact with the reduction gear components which are heat generators, in drawing up the air/oil mixture outside the reduction gear, in cleaning the air of the oil it contains, and in rejecting the cleaned air outside the reduction gear.

2. Integrated device for cooling a mechanical reduction gear according to the method of claim 1, characterized in that the reduction gear is provided on the one hand with at least one air intake (9, 10) equipped with filters (12, 13) and on the other hand with an extraction fan (14) intended to draw into the reduction gear the air mixed with the lubricating oil mist, and in that means (20, 21) for collecting and draining the oil are provided upstream of and/or at the said extraction fan.

3. Cooling device according to claim 2, characterized in that the air intake (9) is covered with an intake casing (10) with downward-facing opening (11) and the opening of which is provided with a wide-mesh grille (12).

4. Cooling device according to claim 2, characterized in that the rotor (15) of the extraction fan (14) is driven by the kinematic chain of the reduction gear by way of a shaft (16).

5. Cooling device according to claims 2 and 4, characterized in that the rotor (15) of the extraction fan (14) rotates inside a recovery housing (17) communicating with the outside through a discharge pipe (18).

6. Cooling device according to claims 2 and 4, characterized in that an oil collecting device consists of a centrifugal deflector (20) mounted on the shaft (16), inside the enclosure (1) of the reduction gear, and upstream of the rotor (15).

7. Cooling device according to claims 2, 4 and 5, characterized in that an oil collecting and drainage device consists of an opening (21) provided at the bottom of the housing (17), which communicates with an oil recovery tank (4) through a small collecting pipe (22).

8. Cooling device according to claim 7, characterized in that a plurality of recovery chutes (23) distributed in the lower portion of the housing (17) feed the collecting pipe (22).

## Patentansprüche

1. Verfahren zur Kühlung eines mechanischen Untersetzungsgetriebes, das durch unter Druck stehendes, zerstäubtes Öl geschmiert wird, dadurch gekennzeichnet, daß es daraus besteht, einen Strom an zuvor gefilterter Frischluft mit Umgebungstemperatur zuzuführen, diese ins Innere des Untersetzungsgetriebes zu leiten, damit sie sich mit dem Ölnebel mischt, wobei sie sich durch direkten Austausch mit dem Öl und durch direkten Kontakt mit den Komponenten des Untersetzungsgetriebes erwärmt, die Wärmeerzeuger sind, das Gemisch aus Luft und Öl aus dem Untersetzungsgetriebe herauszusaugen, die Luft von dem Öl, das sie enthält, zu reinigen und die gereinigte Luft wieder in den Außenraum des Untersetzungsgetriebes auszustoßen.

2. Integrierte Vorrichtung zur Kühlung eines mechanischen Untersetzungsgetriebes nach dem Verfahren von Anspruch 1, dadurch gekennzeichnet, daß das Untersetzungsgetriebe einerseits mit wenigstens einem mit Filtern (12, 13) ausgerüsteten Lufteinlaß (9, 10) und andererseits mit einem Sauggebläse (14) versehen ist, das dazu vorgesehen ist, in dem Untersetzungsgetriebe die mit dem Schmierölnebel gemischte Luft anzusaugen, und dadurch, daß Mittel (20, 21) zur Sammlung und zur Ableitung des Öls oberhalb und/oder auf Höhe des Sauggebläses vorgesehen sind.

3. Vorrichtung zur Kühlung nach Anspruch 2, dadurch gekennzeichnet, daß der Lufteinlaß (9) von einer eine Mündung (11) aufweisenden Einlaßspirale (10) abgedeckt ist, die nach unten orientiert ist und deren Mündung mit einem weitmaschigen Gitter (12) versehen ist.

4. Vorrichtung zur Kühlung nach Anspruch 2, dadurch gekennzeichnet, daß das Rad (15) des Sauggebläses (14) durch die kinematische Kette des Untersetzungsgetriebes mittels einer Welle (16) angetrieben wird.

5. Vorrichtung zur Kühlung nach den Ansprüchen 2 und 4, dadurch gekennzeichnet, daß sich das Rad (15) des Sauggebläses (14) im Inneren eines Rückgewinnungsgehäuses (17) dreht, das mit dem Außenraum über eine Entlüftungsleitung (18) in Verbindung steht.

6. Vorrichtung zur Kühlung nach den Ansprüchen 2 und 4, dadurch gekennzeichnet, daß ein Mittel zur Sammlung von Öl aus einem Zentrifugaldeflektor (20), der auf der Welle (16) angebracht ist, im Inneren der Einfassung (1) des Untersetzungsgetriebes und oberhalb des Rades (15) besteht.

7. Vorrichtung zur Kühlung nach den Ansprüchen 2, 4 und 5, dadurch gekennzeichnet, daß ein Mittel zur Sammlung und zur Ableitung von Öl aus einer am Boden des Gehäuses (17) vorgesehenen Öffnung (21) besteht, die mit einem Ölrückgewinnungsbehälter (4) über eine kleine Sammelleitung (22) in Verbindung steht.

8. Vorrichtung zur Kühlung nach Anspruch 7, dadurch gekennzeichnet, daß mehrere Rückgewinnungsrinnen (23), die im unteren Teil des Gehäuses (17) verteilt sind, die Sammelleitung (22) beschicken.
